# EUROPEAN PATENT SPECIFICATION

(11) **EP 2 286 186 B1**
(45) Date of publication and mention of the grant of the patent: **07.04.2021**
(21) Application number: 09761999.3
(22) Date of filing: 08.06.2009
(51) Int. Cl.: G01F 1/075, G01F 1/115, G01F 3/22, G01F 15/06

(54) **DIAPHRAGM FLOW METER WITH ROTATING MAGNETS**
MEMBRANDURCHFLUSSMESSER MIT ROTIERENDEN MAGNETEN
DÉBITMETRE À DIAPHRAGMME AVEC AIMANTS TOURNANTS

(30) Priority: 09.06.2008 EP 08104321
(43) Date of publication of application: 23.02.2011
(73) Proprietor: George Wilson Industries Limited, Aldermans Green Industrial Estate Aldermans Green, Coventry Warwickshire CV2 2LD (GB)
(72) Inventor: WURTZLER, David, Coventry Warwickshire CV2 2LD (GB)
(74) Representative: Murgitroyd & Company
(86) International application number: PCT/GB2009/050635
(87) International publication number: WO 2009/150450

(56) References cited:
- EP-A- 1 693 651
- EP-A1- 0 212 818
- DE-A1- 4 114 978
- DE-A1-102005 040 057
- FR-A- 2 887 024
- GB-A- 2 170 876
- GB-A- 2 223 593
- JP-A- 2005 321 214
- US-B1- 6 196 065
- US-B1- 6 257 073

## Description

The invention relates to a gas meter.

There are several known types of gas meter, which convert volumes of gas flow into movement of a mechanical counter. Such meters require the customer or a meter reader to physically inspect the meter to read the counter.

It is desirable to be able to accurately and remotely read a gas meter, to thereby reduce the costs involved with meter reading and to provide accurate billing to customers.

US6196065 B1 discloses a device for metering and measuring a quantity of liquid, in particular liquid fuel such as gasoline. The device comprises two mutually engaging screw spindles arranged to rotate in the presence of a liquid flow therethrough. The spindles comprise a direct drive to a pulse generator wheel arranged to generate electrical pulses from rotation of the spindles, thus providing a measure of the liquid flow. DE 4114978 A1 describes a meter according to the preamble of claim 1 with an impeller contained in a housing through which a fluid flows.

According to an aspect of the invention there is provided a gas meter according to claim 1, in which the gas meter comprises:
a meter casing comprising a sensor barrel projecting into the casing and defining a sensor socket;
a gas flow path provided within the meter casing;
a gas engagement member provided in the gas flow path and adapted to be driven by a gas flow;
a magnetic field sensor provided within the sensor socket, on the outside of the meter casing;
a plurality of magnets including at least one north-pole and one south-pole; and
   drive transfer means coupled between the gas engagement member and the magnets, such that gas flow is converted into rotation of the magnets about the sensor, such that the sensor detects corresponding changes in the sense of the magnetic field to which it is exposed,
   wherein the magnets are mounted for rotational movement within the meter casing about the sensor barrel and the axis of rotation of the magnets is generally coaxial with the longitudinal axis of the sensor barrel, characterized in that the magnetic field sensor is located adjacent to the wall of the sensor barrel.

The magnetic field sensor preferably comprises a Hall effect sensor, which most preferably comprises a Hall effect probe having its output connected to a signal conditioning circuit. The Hall effect sensor thereby produces a high or low logic level output signal dependent upon the polarity of the magnetic field passing through the Hall effect probe. The magnetic field sensor is preferably offset from the axis of rotation of the magnets. The magnetic field sensor is thereby exposed to the magnetic field of the magnet passing closest to it. The output signal of the Hall effect sensor is preferably coupled to an electronic index means, most preferably an electronic counter integrated circuit device. The electronic index means converts the varying high/low output voltage from the Hall effect sensor into a digital count which may then be converted into an equivalent gas volume.

The magnetic field sensor is located adjacent to the wall of the sensor barrel, being the internal wall of the sensor socket.

Preferably, the gas meter comprises four permanent magnets general equally spaced about a common axis of rotation. The magnets are preferably provided on a mounting drum, the drum being mounted for rotation around the sensor barrel. The magnets are preferably arranged in a north-pole, south-pole, north-pole, south-pole configuration around the drum.

The drive transfer means preferably comprises a drive shaft, coupled at one end to the mounting drum. The gas engagement member preferably comprises a diaphragm, an impeller or a turbine.

A plurality of gas flow paths may be provided, with a corresponding plurality of gas engagement members located therein.

Where the or each gas engagement member comprises a diaphragm, the drive transfer means preferably further comprises drive conversion means coupled to the diaphragm and adapted to convert reciprocating linear movement of the diaphragm into rotational movement.

The gas meter is preferably a natural gas meter.

An embodiment of the invention will now be described in detail, by way of example only, with reference to the accompanying drawings, in which:

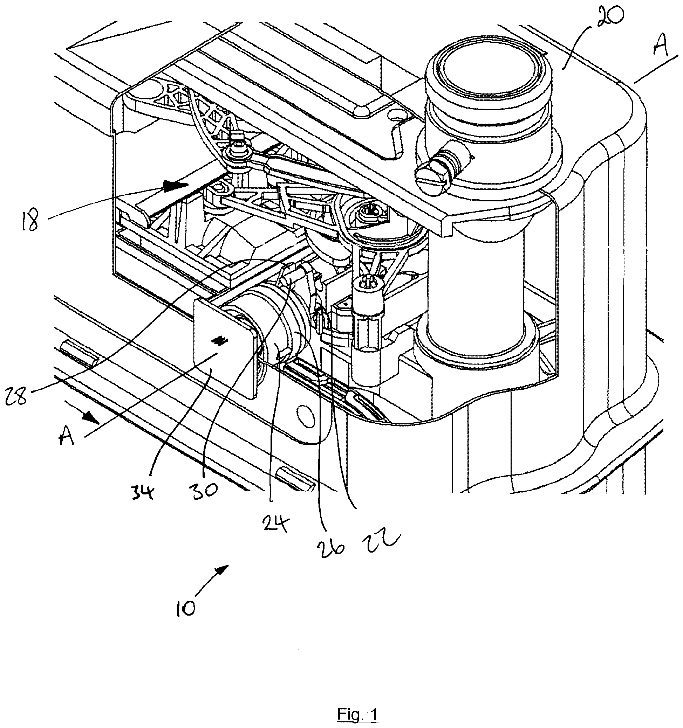

Figure 1 is a diagrammatic part cut-away representation of a diaphragm gas meter according to an embodiment of the invention; and

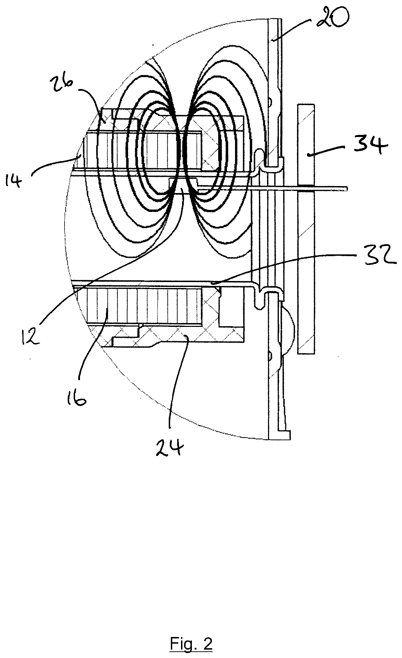

Figure 2 is a diagrammatic part-sectional view along line A-A of Figure 1.

Referring to the drawings, an embodiment of the invention provides a gas meter 10 comprising two gas paths, a Hall effect probe 12, four permanent magnets, 14, 16 (only two are shown) and drive transfer means 18.

The gas meter 10 is a diaphragm gas meter, having two gas flow paths through front and rear diaphragm pans. The first and second gas engagement members comprise the diaphragms provided within the front and rear diaphragm pans. The arrangement of the diaphragm pans, diaphragms, and gas inlet and outlet valves is the same as in conventional diaphragm gas meters, which will be well known to the person skilled in the art and so will not be described in detail here.

The drive transfer means 18 comprises a conventional arrangement of flags coupled to the diaphragms, flag rods and arms, and coupling cranks and gears adapted to convert the reciprocating movement of the diaphragm into rotation of the drive shaft 20. The arrangement of flags, flag rods and arms, and cranks and gears is the same as in a conventional diaphragm gas meter and so will be well known to the person skilled in the art.

The gas flow paths, diaphragm pans, diaphragms and drive transfer means 18 are provided inside the meter's mild steel case 20. As will be well known to the person skilled in the art, the reciprocating movement of the diaphragms within the diaphragm pans is converted and transferred by the drive transfer means 18 into rotation of a drive shaft 22, which completes one full revolution for each cyclic volume (dependent on meter size) of gas that passes through the meter 10.

The magnets 14, 16 are mounted within a mounting drum 24, which is mounted at one end in a mounting cup 26. A coupling tab 28 is provided on the external surface of the mounting cup 26. The magnets 14, 16 are provided in an alternating north-pole, south-pole, north-pole, south-pole arrangement around the central axis of the mounting drum 24.

The axis of the drive shaft 22 is aligned with the axis of the mounting drum 24, and thus the axis of rotation of the magnets 14, 16. The drive shaft 22 is provided with a coupling arm 30 at its distal end which is adapted to engage with and drive the coupling tab 28 on the mounting cup 26. Rotation of the drive shaft 22 is thereby coupled and transferred into rotation of the mounting cup 26 and the magnets 14, 16.

The meter case 20 is provided with a stainless steel sensor barrel 32 which is riveted into the mild steel case 20, and projects internally into the case 20. The mounting drum 24 is located on the sensor barrel 32, such that it closely fits on the sensor barrel 32 but is free to rotate about the sensor barrel. The sensor barrel 32 acts to couple the magnetic fields of the magnets 14, 16 to the outside of the meter case 20.

The Hall effect probe 12 is mounted inside the stainless steel barrel 32, adjacent the barrel wall. The Hall effect probe 12 is thereby located within the magnetic field between subsequent pairs of north and south poles of the magnets 14, 16, as the magnets 14, 16 rotate about the sensor barrel 32. The Hall effect probe 12 is therefore exposed to a changing magnetic field, the polarity of the magnetic field to which the Hall effect probe is exposed alternating as the magnets 14, 16 rotate about the sensor barrel 32; the Hall effect probe alternatingly being located between a north pole and a south pole, then a south pole and a north pole, and so on. The sign of the output Hall voltage generated by the Hall effect probe correspondingly changes, from positive to negative. The output of the Hall effect probe is interfaced to a power source and conditioning circuit 34, to together form a Hall effect sensor, which converts the output Hall voltage signal into a high or low logic level electrical output signal, dependent upon the polarity of the magnetic field passing through it. The Hall effect sensor therefore outputs an alternating high-low signal is that corresponds with the cyclic movement of the magnets 14, 16.

The high/low logic level output signal from the Hall effect sensor is coupled to an electronic index, which is preferably an electronic counter IC chip. The electronic index counts the number of high and low output signals and is operable to convert the count into the equivalent volume of gas that has passed through the meter 10.

The meter 10 thereby provides a digital gas data usage measurement. The meter 10 may additionally be provided with signal transmission means, of the type provided on remotely readable electricity meters for example, such that the meter may be interrogated and the gas usage data read remotely.

## Claims

1. A gas meter (10) comprising:
a meter casing comprising a sensor barrel (32) projecting into the casing and
defining a sensor socket;
a gas flow path provided within the meter casing;
a gas engagement member provided in the gas flow path and adapted to be driven by a gas flow;
a magnetic field sensor (12) provided within the sensor socket, on the outside of the meter casing;
a plurality of magnets (14, 16) including at least one north-pole and one south-pole; and
drive transfer means (18) coupled between the gas engagement member and the magnets, such that gas flow is converted into rotation of the magnets about the sensor, such that the sensor detects corresponding changes in the sense of the magnetic field to which it is exposed,
wherein the magnets are mounted for rotational movement within the meter casing about the sensor barrel and the axis of rotation of the magnets is generally co-axial with the longitudinal axis of the sensor barrel;
**characterized in that** the magnetic field sensor is located adjacent to the wall of the sensor barrel.

2. A gas meter as claimed in claim 1, wherein the magnetic field sensor comprises a Hall effect sensor (12).

3. A gas meter as claimed in claim 2, wherein the output signal of the Hall effect sensor is coupled to an electronic index means.

4. A gas meter as claimed in any preceding claim, wherein the gas meter comprises four permanent magnets generally equally spaced about a common axis of rotation.

5. A gas meter as claimed in claim 1, wherein the magnets are provided on a mounting drum (24) arranged in a north-pole, south-pole, north-pole, south-pole configuration around the drum, the drum being mounted for rotation around the sensor barrel.

6. A gas meter as claimed in any preceding claim, wherein the drive transfer means comprises a drive shaft (22), coupled at one end to the mounting drum (24).

7. A gas meter as claimed in any preceding claim, wherein the gas engagement member comprises a diaphragm, an impeller or a turbine.

8. A gas meter as claimed in any preceding claim, wherein a plurality of gas flow paths are provided, with a corresponding plurality of gas engagement members located therein.

9. A gas meter as claimed in claims 7 or 8, wherein the or each gas engagement member comprises a diaphragm, the drive transfer means further comprises drive conversion means coupled to the diaphragm and adapted to convert reciprocating linear movement of the diaphragm into rotational movement.

10. A gas meter as claimed in any preceding claim, wherein the gas meter is a natural gas meter.

## Patentansprüche

1. Ein Gasmessgerät (10), das Folgendes beinhaltet:
ein Messgerätgehäuse, das einen Sensorbehälter (32), der sich in das Gehäuse hinein erstreckt und einen Sensorsockel definiert, beinhaltet;
einen Gasflussweg, der in dem Messgerätgehäuse bereitgestellt ist;
ein Gaseingriffselement, das in dem Gasflussweg bereitgestellt und angepasst ist, um von einem Gasfluss angetrieben zu werden;
einen Magnetfeldsensor (12) auf der Außenseite des Messgerätgehäuses, der in dem Sensorsockel bereitgestellt ist;
eine Vielzahl von Magneten (14, 16), die mindestens einen Nordpol und einen Südpol umfasst; und
eine Antriebsübertragungseinrichtung (18), gekoppelt zwischen dem Gaseingriffselement und den Magneten, sodass der Gasfluss in Drehbewegung der Magneten um den Sensor herum umgewandelt wird, sodass der Sensor entsprechende Veränderungen in der Richtung des Magnetfelds, dem er ausgesetzt ist, erkennt,
wobei die Magneten für Drehbewegung in dem Messgerätgehäuse um den Sensorbehälter herum montiert sind und die Drehachse der Magneten im Allgemeinen koaxial mit der länglichen Achse des Sensorbehälters ist;
**dadurch gekennzeichnet, dass** sich der Magnetfeldsensor angrenzend an die Wand des Sensorbehälters befindet.

2. Gasmessgerät gemäß Anspruch 1, wobei der Magnetfeldsensor einen Halleffektsensor (12) beinhaltet.

3. Gasmessgerät gemäß Anspruch 2, wobei das Ausgangssignal des Halleffektsensors an eine elektronische Indexiereinrichtung gekoppelt ist.

4. Gasmessgerät gemäß einem der vorhergehenden Ansprüche, wobei das Gasmessgerät vier permanente Magneten beinhaltet, die im Allgemeinen gleichmäßig um eine gemeinsame Drehachse herum beabstandet sind.

5. Gasmessgerät gemäß Anspruch 1, wobei die Magneten auf einer Montagetrommel (24) bereitgestellt sind, die in einer Nordpol-, Südpol-, Nordpol-, Südpolkonfiguration um die Trommel herum angeordnet ist, wobei die Trommel um den Sensorbehälter herum drehbar montiert ist.

6. Gasmessgerät gemäß einem der vorhergehenden Ansprüche, wobei die Antriebsübertragungseinrichtung eine Antriebswelle (22) beinhaltet, die an ein Ende der Montagetrommel (24) gekoppelt ist.

7. Gasmessgerät gemäß einem der vorhergehenden Ansprüche, wobei das Gaseingriffselement eine Membran, einen Rotor oder eine Turbine beinhaltet.

8. Gasmessgerät gemäß einem der vorhergehenden Ansprüche, wobei eine Vielzahl von Gasflusswegen bereitgestellt ist, worin sich eine entsprechende Vielzahl von Gaseingriffselementen befindet.

9. Gasmessgerät gemäß Anspruch 7 oder 8, wobei das oder jedes Gaseingriffselement eine Membran beinhaltet, wobei die Antriebsübertragungseinrichtung ferner eine Antriebsumwandlungseinrichtung beinhaltet, die an die Membran gekoppelt und angepasst ist, um lineare Hin- und Herbewegung der Membran in Drehbewegung umzuwandeln.

10. Gasmessgerät gemäß einem der vorhergehenden Ansprüche, wobei das Gasmessgerät ein Erdgasmessgerät ist.

## Revendications

1. Un compteur de gaz (10) comprenant :
un coffre de compteur comprenant un cylindre de capteur (32) faisant saillie dans le coffre et définissant un logement de capteur ;
une voie d'écoulement de gaz fournie au sein du coffre de compteur ;
un élément d'engagement de gaz fourni dans la voie d'écoulement de gaz et conçu pour être entraîné par un écoulement de gaz ;
un capteur de champ magnétique (12) fourni au sein du logement de capteur, sur l'extérieur du coffre de compteur ;
une pluralité d'aimants (14, 16) incluant au moins un pôle nord et un pôle sud ; et
un moyen de transfert d'entraînement (18) couplé entre l'élément d'engagement de gaz et les aimants, de telle sorte que l'écoulement de gaz est converti en une rotation des aimants autour du capteur, de telle sorte que le capteur détecte des changements correspondants dans le sens du champ magnétique auquel il est exposé,
dans lequel les aimants sont montés pour un déplacement rotatif au sein du coffre de compteur autour du cylindre de capteur et l'axe de rotation des aimants est généralement coaxial avec l'axe longitudinal du cylindre de capteur ;
**caractérisé en ce que** le capteur de champ magnétique est situé de manière adjacente à la paroi du cylindre de capteur.

2. Un compteur de gaz tel que revendiqué dans la revendication 1, dans lequel le capteur de champ magnétique comprend un capteur à effet Hall (12).

3. Un compteur de gaz tel que revendiqué dans la revendication 2, dans lequel le signal de sortie du capteur à effet Hall est couplé à un moyen formant index électronique.

4. Un compteur de gaz tel que revendiqué dans n'importe quelle revendication précédente, le compteur de gaz comprenant quatre aimants permanents généralement espacés de manière égale autour d'un axe de rotation commun.

5. Un compteur de gaz tel que revendiqué dans la revendication 1, dans lequel les aimants sont fournis sur un tambour de montage (24) agencés dans une configuration pôle nord, pôle sud, pôle nord, pôle sud autour du tambour, le tambour étant monté pour une rotation autour du cylindre de capteur.

6. Un compteur de gaz tel que revendiqué dans n'importe quelle revendication précédente, dans lequel le moyen de transfert d'entraînement comprend un arbre d'entraînement (22), couplé au niveau d'une extrémité au tambour de montage (24).

7. Un compteur de gaz tel que revendiqué dans n'importe quelle revendication précédente, dans lequel l'élément d'engagement de gaz comprend un diaphragme, un impulseur ou une turbine.

8. Un compteur de gaz tel que revendiqué dans n'importe quelle revendication précédente, dans lequel une pluralité de voies d'écoulement de gaz sont fournies, avec une pluralité correspondante d'éléments d'engagement de gaz situés dans celles-ci.

9. Un compteur de gaz tel que revendiqué dans les revendications 7 ou 8, dans lequel le ou chaque élément d'engagement de gaz comprend un diaphragme, le moyen de transfert d'entraînement comprend en outre un moyen de conversion d'entraînement couplé au diaphragme et conçu pour convertir un déplacement linéaire en va-et-vient du diaphragme en un déplacement rotatif.

10. Un compteur de gaz tel que revendiqué dans n'importe quelle revendication précédente, le compteur de gaz étant un compteur de gaz naturel.
